# EUROPEAN PATENT APPLICATION

(11) **EP 4 756 652 A1**
(43) Date of publication of application: **10.06.2026**
(21) Application number: 25218008.8
(22) Date of filing: 24.11.2025
(51) Int. Cl.: G06F 21/52, G06F 21/53, G06F 21/54, G06F 21/55

(54) **METHOD AND APPARATUS FOR DETECTING INTRUSION AND STORAGE MEDIUM**

(30) Priority: 03.12.2024 CN 202411768117
(71) Applicant: Alipay (Hangzhou) Digital Service Technology Co., Ltd., Hangzhou, Zhejiang 310000 (CN)
(72) Inventor: WEI, Tao, Hangzhou, Zhejiang, 310000 (CN); QIU, Zhebin, Hangzhou, Zhejiang, 310000 (CN); ZHONG, Qichao, Hangzhou, Zhejiang, 310000 (CN); WANG, Xiaolu, Hangzhou, Zhejiang, 310000 (CN); LIU, Yujiang, Hangzhou, Zhejiang, 310000 (CN); WANG, Yu, Hangzhou, Zhejiang, 310000 (CN); LI, Ping, Hangzhou, Zhejiang, 310000 (CN); LIU, Chen, Hangzhou, Zhejiang, 310000 (CN); BIAN, Enze, Hangzhou, Zhejiang, 310000 (CN); JIANG, Chengman, Hangzhou, Zhejiang, 310000 (CN); ZHANG, Hengmao, Hangzhou, Zhejiang, 310000 (CN); WEI, Shuangsheng, Hangzhou, Zhejiang, 310000 (CN); GU, Weiqun, Hangzhou, Zhejiang, 310000 (CN); SHEN, Yun, Hangzhou, Zhejiang, 310000 (CN)
(74) Representative: Winter, Brandl - Partnerschaft mbB

(57) **Abstract**

Embodiments of this specification disclose a method and apparatus for detecting intrusion, a storage medium and a device. In this method, a pointcut is set in a dynamic link library of a JVM, a corresponding aspect is initiated at an operating system kernel layer. When the aspect is triggered, the operating system kernel queries, by stack information, a method that is invoked in the dynamic link library by a target event triggering the aspect, and accordingly detects whether the target event is an intrusion event. Since in this method, an intrusion event is detected by a system layer, a system invocation generated by the intrusion can be sensed, even if an intruder directly intruded from a JDWP protocol layer, thereby effectively defending against the event.

## Description

### TECHNICAL FIELD

This specification relates to the field of computer technologies, and in particular, to a method and apparatus for detecting intrusion, a storage medium, and a device.

### BACKGROUND

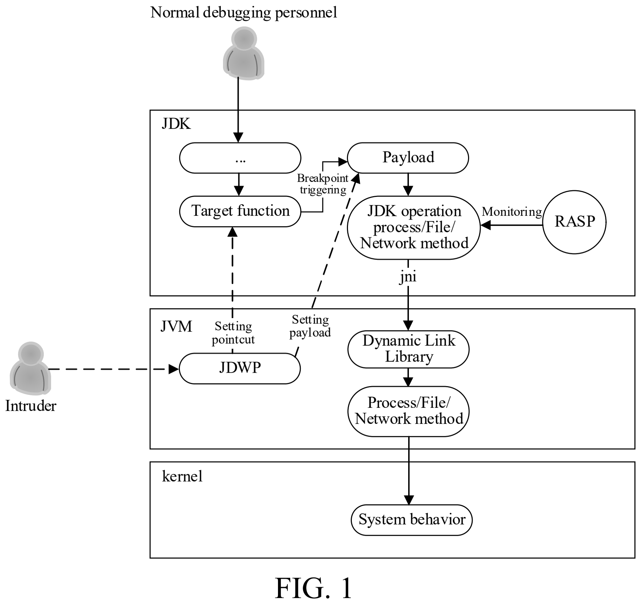

Currently, a Java application program is widely applied to various fields. After writing the Java application program, a developer can debug the Java application program by using a Java Deployment Kit (JDK), as shown in FIG. 1.

The JDK is configured to provide a debugging environment for a Java application program, and the JDK further needs to run on a Java Virtual Machine (JVM). Communication with a debugged application (that is, the Java application program) is implemented through a Java Debug Wire Protocol (JDWP) provided by the JVM. That is to say, the JDK requires a running environment provided by the JVM, and the JVM runs on an operating system kernel. It can be learned that layers are the kernel, the JVM, and the JDK from bottom to top, separately.

To prevent the Java application program debugged in the JDK from being intruded, in the existing technology, a Runtime Application Self-Protection (RASP) module is usually used in the JDK so as to defend.

However, as can be seen from FIG. 1, the RASP module is located in the JDK, and can only defend against external intrusion at an application layer. If an intruder directly intrudes the debugged Java application program in the JDK from a protocol layer of the JDWP, the RASP module cannot sense an intrusion event, and therefore cannot effectively defend against the intrusion.

Therefore, embodiments of this specification provide a method and apparatus for detecting intrusion, a storage medium and a device.

### SUMMARY

Embodiments of this specification provide a method and apparatus for detecting intrusion, a storage medium and an electronic device, to partially resolve the foregoing problem in the existing technology.

The following technical solutions are used in the embodiments of this specification:
This specification provides a method for detecting intrusion. The method is applied to an operating system kernel. The method comprises steps of: setting, in advance, a pointcut in a dynamic link library of a Java Virtual Machine running on the operating system kernel;
initiating an aspect according to the pointcut by the operating system kernel;
obtaining stack information corresponding to execution of a target event by the Java Virtual Machine when it is detected that the aspect is triggered by execution of the target event by the Java Virtual Machine;
determining a method that corresponds to the stack information in the dynamic link library; and
auditing the method according to a preset rule, to detect whether the target event is an intrusion event.

Optionally, the step of initiating an aspect according to the pointcut by the operating system kernel specifically comprises:
making the aspect to the pointcut by at least one of an ebpf uprobe technology, a kernel module and a GOT table clipping method used by the operating system kernel, and initiating the aspect by the operating system kernel.

Optionally, the step of obtaining stack information corresponding to execution of a target event by the Java Virtual Machine specifically comprises:
traversing stack frames of a cpu register, obtaining a memory address returned by each of the stack frames, and using the memory address as stack information corresponding to execution of the target event by the Java Virtual Machine.

Optionally, the step of determining a method that corresponds to the stack information in the dynamic link library specifically comprises:
resolving a so file symbol table;
determining a method that corresponds to the memory address in the dynamic link library.

Optionally, a Java Deployment Kit runs on the Java Virtual Machine, and the Java Deployment Kit comprises a Runtime Application Self-Protection module; and
after the step of detecting whether the target event is an intrusion event, the method further comprises:
sending a detection result to the Runtime Application Self-Protection module, so that the Runtime Application Self-Protection module processes the target event according to the detection result.

This specification provides an apparatus for detecting intrusion, where a pointcut is set in advance in a dynamic link library of a Java Virtual Machine running on the apparatus. The apparatus comprises:
an aspect module, configured to initiate an aspect according to the pointcut;
a call stack backtracking module, configured to obtain stack information corresponding to execution of a target event by the Java Virtual Machine when it is detected that the aspect is triggered by execution of the target event by the Java Virtual Machine;
a converting module, configured to determine a method that corresponds to the stack information in the dynamic link library; and
a rule matching module, configured to audit the method according to a preset rule, to detect whether the target event is an intrusion event.

Optionally, the aspect module is specifically configured to make the aspect to the pointcut by using at least one of an ebpf uprobe technology, a kernel module, and a GOT table clipping method, and initiate the aspect.

Optionally, a Java Deployment Kit runs on the Java Virtual Machine, and the Java Deployment Kit comprises a Runtime Application Self-Protection module; and
the rule matching module is further configured to: send a detection result to the Runtime Application Self-Protection module after detecting whether the target event is an intrusion event, so that the Runtime Application Self-Protection module processes the target event according to the detection result.

This specification provides a computer-readable storage medium. The storage medium stores a computer program, and the computer program implements the foregoing method for detecting intrusion when being executed by a processor.

This specification provides an electronic device. The electronic device comprises a memory, a processor, and a computer program stored on the memory and capable of being run on the processor. The processor implements the foregoing method for detecting intrusion when executing the program.

The foregoing at least one technical solution used in the embodiments of this specification can achieve the following beneficial effects:
an embodiment of this specification discloses a method for detecting intrusion. In this method, a pointcut is set in a dynamic link library of a JVM, a corresponding aspect is initiated at an operating system kernel layer. When the aspect is triggered, the operating system kernel queries, by using stack information, a method that is invoked in the dynamic link library by a target event triggering the aspect, and accordingly detects whether the target event is an intrusion event. Since in this method, an intrusion event is detected by a system layer, a system invocation generated by the intrusion can be sensed, even if an intruder directly intrudes from a JDWP protocol layer, thereby effectively defending against the event.

### BRIEF DESCRIPTION OF THE DRAWINGS

The accompanying drawings described herein are used to provide a further understanding of this specification, and constitute a part of this specification. Exemplary embodiments of this specification and descriptions thereof are used to explain this specification, and do not constitute an improper limitation to this specification. In the accompanying drawings:
FIG. 1 is a schematic diagram of a system for detecting intrusion in the existing technology;
FIG. 2 is a schematic flowchart of intrusion detection according to an embodiment of this specification;
FIG. 3 is a schematic diagram of a system for detecting intrusion according to an embodiment of this specification;
FIG. 4 is a schematic structural diagram of an apparatus for detecting intrusion according to an embodiment of this specification;
FIG. 5 is a schematic structural diagram of an electronic device according to an embodiment of this specification.

### DETAILED DESCRIPTION

To make the objectives, technical solutions, and advantages of this specification clearer, the technical solutions of this specification are clearly and completely described below in conjunction with specific embodiments of this specification and corresponding accompanying drawings. Apparently, the described embodiments are only a part rather than all of the embodiments of this specification. All other embodiments obtained by a person of ordinary skill in the art based on the embodiments of this specification without creative efforts shall fall within the protection scope of this specification.

The following describes the technical solutions provided in the embodiments of this specification in detail in conjunction with the accompanying drawings.

It can be seen from FIG. 1 that, when debugging a Java application program, a normal debugging personnel usually sets a breakpoint in a target function of the Java application program by the JDK, obtains some parameters (payloads) of the target function at the breakpoint, makes an adjustment to the payloads and continues to run. The Java application program on which the payloads are adjusted calls a method in a dynamic link library of the JVM by the JDK, to perform an operation on a process, a file, or a network instruction in the JVM system. Although communication is performed between the JDK and the JVM by the JDWP protocol, the normal debugging personnel does not directly use the JDWP, or the debugging personnel does not sense the JDWP. An intruder can directly intrude the Java application program from the JDWP, set the breakpoint for the target function, and then directly modify the payloads by the JDWP, and further call the method in the dynamic link library of the JVM by the modified Java application program. Therefore, in this embodiment of this specification, the intrusion event can be detected by monitoring, at a system layer, a case in which the dynamic link library of the JVM is invoked.

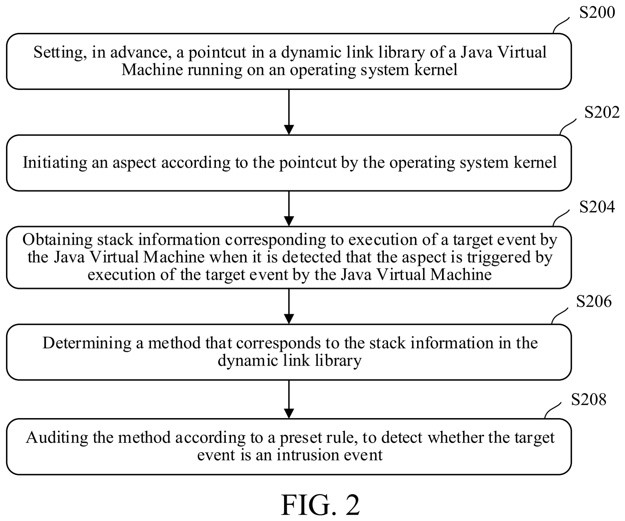

FIG. 2 is a schematic flowchart of intrusion detection according to this specification. The intrusion detection can specifically include the following steps:
S200: setting, in advance, a pointcut in a dynamic link library of a Java Virtual Machine running on an operating system kernel.

In this embodiment of this specification, before detection starts, a pointcut needs to be set in the dynamic link library of the JVM, that is, instrumentation is performed in the dynamic link library of the JVM. The dynamic link library of the JVM is codes written by a Java Native Interface (JNI) technology, and is configured to extend and enhance functions of the JVM. When the Java application program is debugged by using the JDK run by the JVM, if the intruder intrudes the Java application program by the JDWP, some methods in the dynamic link library of the JVM are usually used. Therefore, the pointcut can be set in the dynamic link library in advance.

S202: initiating an aspect according to the pointcut by the operating system kernel.

In this embodiment of this specification, steps S202 to S208 are all performed by kernel.

In step S202, the kernel can make the aspect to the pointcut in step S200 by using a method such as an ebpf uprobe technology, a kernel module, a GOT table clipping or the like, and initiate the aspect.

S204: obtaining stack information corresponding to execution of a target event by the Java Virtual Machine when it is detected that the aspect is triggered by execution of the target event by the Java Virtual Machine.

When the method in which the pointcut is set in the dynamic link library of the JVM is called, the kernel can monitor that the initiated aspect is triggered. In this case, it can be considered that the aspect is triggered when the JVM executes the target event, and stack frames of a cpu register can be traversed, to obtain a memory address returned by each of the stack frames, and to use the memory address as stack information corresponding to execution of the target event by the JVM.

S206: determining a method that corresponds to the stack information in the dynamic link library.

After obtaining the stack information, the kernel can query the method in the JVM dynamic link library according to the stack information. Specifically, after traversing stack frames of the cpu register and obtaining the memory address returned by each of the stack frames, the kernel can resolve a so file symbol table and query a method that corresponds to the memory address in the dynamic link library of the JVM.

S208: auditing the method according to a preset rule, to detect whether the target event is an intrusion event.

The foregoing preset rule can be preset as required. After the method that is invoked in the dynamic link library when the JVM executes the target event is queried in step S206, the queried method may be audited according to the preset rule, to determine whether the target event is an intrusion event.

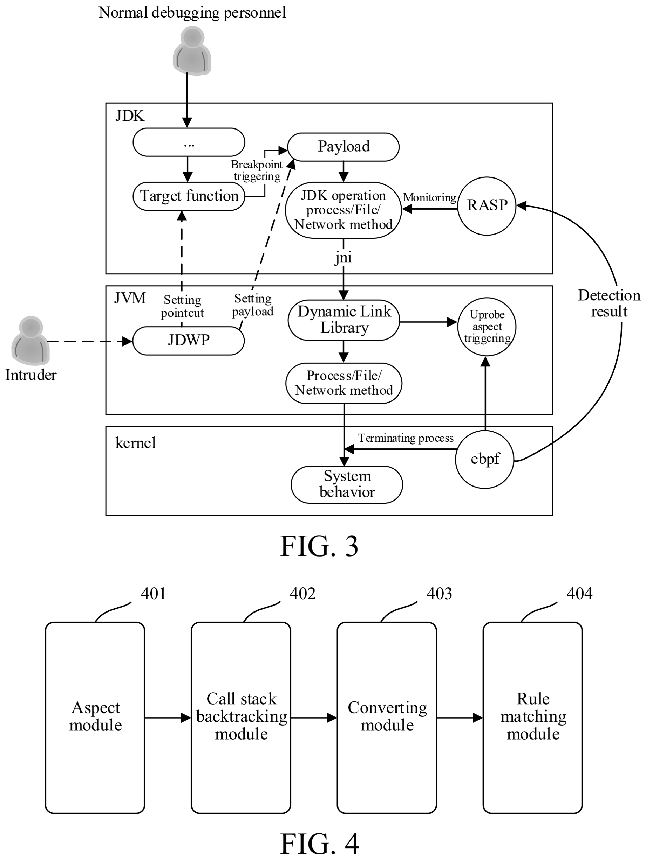

In addition, to be consistent with using the RASP module to defend against intrusion at the application layer in the existing technology, after detecting whether the foregoing target event is the intrusion event and obtaining a detection result, kernel in this specification can further send the detection result to the RASP module in the JDK, so that the RASP module processes the target event according to the detection result, as shown in FIG. 3.

In FIG. 3, the kernel makes the aspect according to the pointcut by an ebpf uprobe technology. When the aspect is triggered, a process of the target event in the kernel is terminated, whether the intrusion event is detected according to the preset rule, and then the detection result is returned to the RASP.

By using the foregoing method, the detection of the intrusion event in the operating system kernel state can be implemented. Even if the intruder initiates intrusion at the JDWP protocol layer, effective detection and defense can still be implemented by using the method provided in this specification.

The foregoing describes a method for detecting intrusion provided in an embodiment of this specification. Based on a same concept, this specification further provides a corresponding apparatus, a storage medium, and an electronic device.

FIG. 4 is a schematic diagram of an apparatus for detecting intrusion according to an embodiment of this specification. The apparatus can be applied to an operating system kernel; where a pointcut is set in advance in a dynamic link library of a Java Virtual Machine running on the apparatus; the apparatus comprises:
an aspect module 401, configured to initiate an aspect according to the pointcut;
a call stack backtracking module 402, configured to obtain stack information corresponding to execution of a target event by the Java Virtual Machine when it is detected that the aspect is triggered by execution of the target event by the Java Virtual Machine;
a converting module 403, configured to determine a method that corresponds to the stack information in the dynamic link library; and
a rule matching module 404, configured to audit the method according to a preset rule, to detect whether the target event is an intrusion event.

Optionally, the aspect module 401 is specifically configured to make the aspect to the pointcut by using at least one of an ebpf uprobe technology, a kernel module, and a GOT table clipping method, and initiate the aspect.

Optionally, the call stack backtracking module 402 is specifically configured to traverse stack frames of a cpu register, obtain a memory address returned by each of the stack frames, and use the memory address as stack information corresponding to execution of the target event by the Java Virtual Machine.

Optionally, the converting module 403 is specifically configured to: resolve a so file symbol table; and determine a method that corresponds to the memory address in the dynamic link library.

Optionally, a Java Deployment Kit runs on the Java Virtual Machine, and the Java Deployment Kit comprises a Runtime Application Self-Protection module; and
the rule matching module 404 is further configured to: send a detection result to the Runtime Application Self-Protection module after detecting whether the target event is an intrusion event, so that the Runtime Application Self-Protection module processes the target event according to the detection result.

This specification further provides a computer-readable storage medium. The storage medium stores a computer program. The computer program can be used to perform the method for detecting intrusion provided in FIG. 1 when executed by a processor.

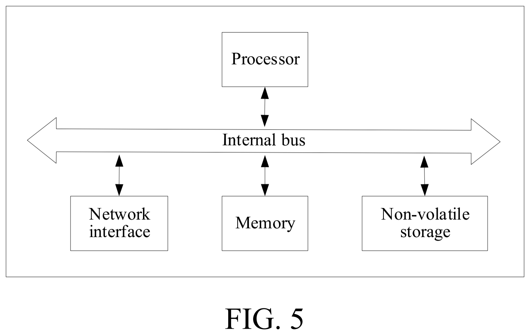

Based on the method for detecting intrusion shown in FIG. 1, an embodiment of this specification further provides a schematic structural diagram of an electronic device shown in FIG. 5. As shown in FIG. 5, at the hardware layer, the electronic device includes a processor, an internal bus, a network interface, a memory, and a non-volatile storage, and certainly may further include hardware required by other services. The processor reads a corresponding computer program from the non-volatile memory into the memory and then runs the computer program, to implement the method for detecting intrusion shown in FIG. 2.

Certainly, in addition to a software implementation, this specification does not exclude other implementation, such as a logic device, a combination of software and hardware or the like. That is to say, an executing main body of the following processing procedure is not limited to each logic unit, and can also be a hardware or logic device.

In the 1990s, improvements in a technology can be clearly categorized as hardware improvements (for example, improvements to a circuit structure such as a diode, a transistor, a switch, etc.) and software improvements (improvements to a method procedure). However, with the development of technology, improvements of many method procedures can now be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (PLD) such as a field programmable gate array (FPGA) is a type of integrated circuit whose logic function is determined by a user by programming the device. The designers perform voluntary programming to "integrate" a digital system into a single PLD without requiring a chip manufacturer to design and prepare a dedicated integrated circuit chip. In addition, nowadays, instead of making an integrated circuit chip manually, the programming is mostly implemented by using "logic compiler" software, which is similar to the software compiler used to write programs. Original code before compiling is also written in a specific programming language, which is referred to as Hardware Description Language (HDL). There are many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, Ruby Hardware Description Language (RHDL), etc. Currently, Very-High-Speed Integrated Circuit Hardware Description Language (VHDL) and Verilog are most commonly used. A person skilled in the art should also understand that as long as a method procedure is logically programmed and then programmed to an integrated circuit by using the foregoing hardware description languages, a hardware circuit that implements the logical method procedure can be easily obtained.

The controller can be implemented in any suitable manner. For example, the controller can take the form of, for example, a microprocessor or processor and a computer-readable medium storing computer-readable program code (for example, software or firmware) executable by the processor, a logic gate, a switch, an application-specific integrated circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. The memory controller can also be implemented as part of the memory control logic. A person skilled in the art will also appreciate that, in addition to implementing, by logically programming the method steps, the controller in the form of pure computer-readable program code, it is also possible to implement the controller in the form of a logic gate, switch, application-specific integrated circuit, programmable logic controller, and embedded microcontroller and other forms to achieve the same function. Such a controller can thus be considered as a hardware component and apparatuses included therein for implementing various functions can also be considered as structures inside the hardware component. Alternatively, apparatuses configured to implement various functions can be considered as both software modules implementing the method and structures inside the hardware component.

The system, the apparatus, the module or the unit described in the foregoing embodiments may be specifically implemented by a computer chip or an entity, or implemented by a product having a certain function. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

For ease of description, when the apparatus is described, the apparatus is divided into units according to functions, which are separately described. Certainly, in implementation of this specification, the functions of the units may be implemented in the same piece of or a plurality of pieces of software and/or hardware.

A person skilled in the art should understand that the embodiments of this specification may be provided as a method, a system, or a computer program product. Therefore, this specification can use a form of a hardware-only embodiment, a software-only embodiment, or an embodiment with a combination of software and hardware. In addition, this specification can use a form of a computer program product implemented on one or more computer usable storage media (including but not limited to a disk memory, a CD-ROM, an optical memory and the like) that include computer usable program code.

This specification is described with reference to the flowcharts and/or block diagrams of the method, the device (system), and the computer program product according to the embodiments of this specification. It should be understood that computer program instructions can implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may further be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, the computing device includes one or more processors (CPU), an input/output interface, a network interface, and a memory.

The memory may include a form such as a volatile memory, a random access memory (RAM), and/or a non-volatile memory such as a read-only memory (ROM) or a flash memory (flash RAM) in a computer-readable medium. The memory is an example of the computer-readable medium.

The computer-readable medium includes a non-volatile medium and a volatile medium, a removable medium and a non-removable medium, which may implement storage of information by using any method or technology. The information may be a computer-readable instruction, a data structure, a program module, or other data. Examples of a computer storage medium include but are not limited to a phase-change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette tape, a magnetic tape, a magnetic disk storage or other magnetic storage device, or any other non-transmission medium, which may be configured to store information accessible by a computing device. According to the definitions herein, the computer readable medium does not include a transitory medium, such as a modulated data signal and a carrier.

It should be further noted that the terms "include", "comprise", or any variants thereof are intended to cover a non-exclusive inclusion. Therefore, a process, method, article, or device that includes a series of elements not only includes such elements, but also includes other elements not specified expressly, or may include inherent elements of the process, method, article, or device. Unless otherwise specified, an element limited by "include a/an..." does not exclude other same elements existing in the process, the method, the article, or the device that includes the element.

A person skilled in the art should understand that the embodiments of this specification may be provided as a method, a system, or a computer program product. Therefore, this specification can use a form of a hardware-only embodiment, a software-only embodiment, or an embodiment with a combination of software and hardware. In addition, this specification can use a form of a computer program product implemented on one or more computer usable storage media (including but not limited to a disk memory, a CD-ROM, an optical memory and the like) that include computer usable program code.

This specification can be described in the general context of computer-executable instructions executed by a computer, for example, program modules. Generally, the program module includes a routine, a program, an object, a component, a data structure, and the like for executing a particular task or implementing a particular abstract data type. This specification may also be implemented in a distributed computing environment in which tasks are performed by remote processing devices connected by using a communication network. In a distributed computing environment, the program module may be located in both local and remote computer storage media including storage devices.

The embodiments of this specification are all described in a progressive manner, for same or similar parts in the embodiments, refer to these embodiments, and descriptions of each embodiment focus on a difference from other embodiments. Especially, a system embodiment is basically similar to a method embodiment, and therefore is described briefly; for related parts, reference may be made to partial descriptions in the method embodiment.

The foregoing descriptions are merely embodiments of this specification, but are not intended to limit this specification. A person skilled in the art can make various modifications and variations to this specification. Any modification, equivalent replacement improvement, and the like made within the spirit and principle of this specification shall fall within the scope of the claims of this specification.

## Claims

1. A method for detecting intrusion, the method being applied to an operating system kernel; the method comprises steps of: setting, in advance, a pointcut in a dynamic link library of a Java Virtual Machine running on the operating system kernel;
initiating an aspect according to the pointcut by the operating system kernel;
obtaining stack information corresponding to execution of a target event by the Java Virtual Machine when it is detected that the aspect is triggered by execution of the target event by the Java Virtual Machine;
determining a method that corresponds to the stack information in the dynamic link library; and
auditing the method according to a preset rule, to detect whether the target event is an intrusion event.

2. The method according to claim 1, wherein the step of initiating an aspect according to the pointcut by the operating system kernel specifically comprises:
making the aspect to the pointcut by at least one of an ebpf uprobe technology, a kernel module and a GOT table clipping method used by the operating system kernel, and initiating the aspect by the operating system kernel.

3. The method according to claim 1, wherein the step of obtaining stack information corresponding to execution of a target event by the Java Virtual Machine specifically comprises:
traversing stack frames of a cpu register, obtaining a memory address returned by each of the stack frames, and using the memory address as stack information corresponding to execution of the target event by the Java Virtual Machine.

4. The method according to claim 3, wherein the step of determining a method that corresponds to the stack information in the dynamic link library specifically comprises:
resolving a so file symbol table;
determining a method that corresponds to the memory address in the dynamic link library.

5. The method according to claim 1, wherein a Java Deployment Kit runs on the Java Virtual Machine, and the Java Deployment Kit comprises a Runtime Application Self-Protection module; and
wherein after the step of detecting whether the target event is an intrusion event, the method further comprises:
sending a detection result to the Runtime Application Self-Protection module, so that the Runtime Application Self-Protection module processes the target event according to the detection result.

6. A computer-readable storage medium, the storage medium storing a computer program, and the computer program implementing the method according to any one of claims 1 to 5 when being executed by a processor.

7. An electronic device, comprising a memory, a processor, and a computer program stored on the memory and capable of being run on the processor, wherein the processor implements the method according to any one of claims 1 to 5 when executing the program.

8. A computer program comprising computer executable instructions which when executed by a processor cause the processor to implement the method of any one of claims 1 to 5.
